# EUROPEAN PATENT APPLICATION

(11) **EP 3 148 099 A1**
(43) Date of publication of application: **29.03.2017**
(21) Application number: 14895101.5
(22) Date of filing: 21.08.2014
(51) Int. Cl.: H04B 10/27

(54) **PHOTOELECTRIC RECEIVING AND TRANSMITTING METHOD AND DEVICE, AND PHOTOELECTRIC RECEIVING/TRANSMITTING METHOD, MODULE AND DEVICE**

(30) Priority: 17.06.2014 CN 201410271363
(71) Applicant: ZTE Corporation, Shenzhen, Guangdong 518057 (CN)
(72) Inventor: YIN, Yongjia, Shenzhen Guangdong 518057 (CN); LI, Mingsheng, Shenzhen Guangdong 518057 (CN); YUAN, Liquan, Shenzhen Guangdong 518057 (CN); ZHU, Songlin, Shenzhen Guangdong 518057 (CN); MA, Zhuang, Shenzhen Guangdong 518057 (CN); GUO, Yong, Shenzhen Guangdong 518057 (CN)
(74) Representative: Regimbeau
(86) International application number: PCT/CN2014/084943
(87) International publication number: WO 2015/192467

(57) **Abstract**

An optical-electrical receiving and transmitting method and apparatus, as well as an optical-electrical transceiving method, module and device are provided, so as to solve problems in an optical-electrical transceiving system that a physical interface is not simplified and is hard to be plugged and unplugged. In the present application, a multipath optical-electrical transceiving processing method is adopted, including: in a reception direction, a received optical signal is split into multipath optical signals, the multipath optical signals are processed into multipath parallel electrical signals, and the multipath parallel electrical signals are converted into a single-path serial electrical signal; in a transmission direction, a received single-path serial electrical signal, which is to be transmitted, is converted into multipath parallel electrical signals, then the multipath parallel electrical signals are processed into multipath optical signals, and finally the multipath optical signals are combined into a single beam of optical signals. Compared with the existing art, the problems in the existing art that quantity of physical interfaces of an optical network system is large and the interfaces are hard to be plugged and unplugged due to adoption of a stacking technology when capacity of the optical network is large, are avoided.

## Description

### TECHNICAL FIELD

The present invention relates to the technical field of optical communications, and in particular relates to an optical-electrical receiving and transmitting method and apparatus, as well as an optical-electrical transceiving method, module and device.

### BACKGROUND

In the traditional optical communication technology, data is received and transmitted with a single-path optical-electrical transceiving module, and the single-path optical-electrical transceiving module is externally connected with a single optical interface and a single electrical interface to receive and transmit the data. However, with the ever-increasing capacity of an optical communication system, the single-path optical-electrical transceiving module with the single optical interface and single electrical interface cannot meet actual demands. A common existing technology is that a plurality of single-path optical-electrical transceiving modules are stacked together so as to receive and transmit large volumes of data, but the stacking technology results in extremely large quantity of physical electrical interfaces and optical interfaces of the system, causing plugging/unplugging inconvenience of the physical interfaces of the system. Therefore, based on the above problems, how to reduce the number of the physical interfaces of the optical-electrical transceiving module is a technical problem to be solved at present.

### SUMMARY

The present invention provides an optical-electrical receiving and transmitting method and apparatus, as well as an optical-electrical transceiving method, module and device, so as to solve at least the problems in an optical-electrical transceiving system of related technologies that physical interfaces are not simplified and are hard to be plugged and unplugged.

In order to solve the above problems, the present application provides an optical-electrical receiving method, including:
receiving an optical signal transmitted from an optical interface, and splitting the optical signal into multipath optical signals;
processing the multipath optical signals into multipath parallel electrical signals; and converting the multipath parallel electrical signals into a single-path serial electrical signal, and transmitting the single-path serial electrical signal to an electrical interface.

In an embodiment of the present invention, a manner of splitting the received optical signal into multipath optical signals includes:
splitting the received optical signal into multipath optical signals according to wavelength and/or distribution power of the received optical signal.

In an embodiment of the present invention, the step of processing the multipath optical signals into multipath parallel electrical signals includes: processing the multipath optical signals into electrical signals of multipath parallel data frame structures, the multipath parallel data frame structures include reception frame headers and data of reception paths.

In an embodiment of the present invention, the step of converting the multipath parallel electrical signals into a single-path serial electrical signal includes:
acquiring data of multipath parallel reception paths according to the reception frame headers in the multipath parallel data frame structures; and
processing the acquired data of the multipath parallel reception paths into a single-path serial data frame structure, the single-path serial data frame structure includes a serial reception frame header and data of at least one reception path.

In an embodiment of the present invention, the frame headers or the data of reception paths of the data frame structures further include path operating information; the path operating information includes at least one of path operating mode information, path signal modulation format information, path data transmission rate information, path operating wavelength information and operating path quantity information.

In order to solve the above problems, the present application provides an optical-electrical receiving module, including an optical splitting processing unit, an optical-electrical processing unit and a parallel-serial conversion unit.

The optical splitting processing unit is configured to split an optical signal transmitted from an optical interface into multipath optical signals, and transmit the multipath optical signals to the optical-electrical processing unit.

The optical-electrical processing unit is configured to process the received multipath optical signals into multipath parallel electrical signals, and transmit the multipath parallel electrical signals to the parallel-serial conversion unit.

The parallel-serial conversion unit is configured to convert the received multipath parallel electrical signals into a single-path serial electrical signal, and transmit the single-path serial electrical signal to an electrical interface.

In an embodiment of the present invention, the optical splitting processing unit is further configured to split the received optical signal into multipath optical signals according to wavelength and/or distributed power of the received optical signal.

In order to solve the above problems, the present application provides an electrical-optical transmitting method, including:
receiving a single-path serial electrical signal transmitted from an electrical interface, which is to be transmitted, and converting the single-path serial electrical signal into multipath parallel electrical signals;
processing the multipath parallel electrical signals into multipath optical signals; and
combining the multipath optical signals into a single beam of optical signals, and transmitting the beam of optical signals to an optical interface.

In an embodiment of the present invention, the single-path serial electrical signal is of a data frame structure, and the data frame structure includes a serial transmission frame header and data of at least one of the transmission paths.

A process of converting the single-path serial electrical signal into multipath parallel electrical signals includes:
acquiring data of the transmission paths according to serial transmission frame header in the single-path serial data frame structure; and
processing the acquired data of the transmission paths into multipath parallel data frame structures, the multipath parallel data frame structures include transmission frame headers and data of the transmission paths.

In an embodiment of the present invention, the frame headers or the data of transmission paths of the data frame structures further includes path operating information; the path operating information includes at least one of the path operating mode information, the path signal modulation format information, the path data transmission rate information, the path operating wavelength information and the operating path quantity information.

In order to solve the above problems, the present application provides an electrical-optical transmitting module, including a serial-parallel conversion unit, an electrical-optical processing unit and an optical combining processing unit.

The serial-parallel conversion unit is configured to convert the single-path serial electrical signal transmitted from the electrical interface, which is to be transmitted, into multipath parallel electrical signals, and transmit the multipath parallel electrical signals to the electrical-optical processing unit.

The electrical-optical processing unit is configured to process the received multipath parallel electrical signals into multipath optical signals, and transmit the multipath optical signals to the optical combining processing unit.

The optical combining processing unit is configured to combine the received multipath optical signals into a single beam of optical signals, and transmit the beam of optical signals to the optical interface.

In an embodiment of the present invention, the optical combining processing unit is further configured to combine the multipath optical signals into a beam of optical signals according to wavelength and/or distributed power of the multipath optical signals.

In order to solve the above problems, the present application provides a multipath optical-electrical transceiving method, including:
in a reception direction,
receiving an optical signal transmitted from an optical interface, and splitting the optical signal into multipath optical signals;
processing the multipath optical signals into multipath parallel electrical signals;
converting the multipath parallel electrical signals into a single-path serial electrical signal, and transmitting the single-path serial electrical signal to an electrical interface;
in a transmission direction,
receiving a single-path serial electrical signal transmitted from the electrical interface, which is to be transmitted, and converting the single-path serial electrical signal into multipath parallel electrical signals;
processing the multipath parallel electrical signals into multipath optical signals; and
combining the multipath optical signals into a single beam of optical signals, and transmitting the beam of optical signals to the optical interface.

In order to solve the above problems, the present application provides a multipath optical-electrical transceiving module, including: an optical path splitting-combining processing unit, an optical-electrical path processing unit and a serial-parallel conversion unit,
in a reception direction,
the optical path splitting-combining processing unit is configured to split an optical signal received from an optical interface into multipath optical signals, and transmit the multipath optical signals to the optical-electrical path processing unit;
the optical-electrical path processing unit is configured to process the received multipath optical signals into multipath parallel electrical signals, and transmit the multipath parallel electrical signals to the serial-parallel conversion unit;
the serial-parallel conversion unit is configured to convert the multipath parallel electrical signals into a single-path serial electrical signal, and transmit the single-path serial electrical signal to an electrical interface;
in a transmission direction,
the serial-parallel conversion unit is configured to convert the single-path serial electrical signal received from the electrical interface, which is to be transmitted, into multipath parallel electrical signals, and transmit the multipath parallel electrical signals to the optical-electrical path processing unit;
the optical-electrical path processing unit is configured to process the received multipath parallel electrical signals into multipath optical signals, and transmit the multipath optical signals to the optical path splitting-combining processing unit;
the optical path splitting-combining processing unit is configured to combine the multipath optical signals into a single beam of optical signals, and transmit the beam of optical signals to the optical interface.

In an embodiment of the present invention, in the reception direction, the optical path splitting-combining processing unit splits the optical signal received from the optical interface into multipath optical signals according to wavelength and/or distributed power of the optical signal;
in the transmission direction, the optical path splitting-combining processing unit combines the multipath optical signals into a beam of optical signals according to the wavelength and/or distributed power of the multipath optical signals.

In an embodiment of the present invention, in the reception direction,
the optical-electrical path processing unit is further configured to process the multipath optical signals into electrical signals of multipath parallel data frame structures, wherein the multipath parallel data frame structures include reception frame headers and data of reception paths;
the serial-parallel conversion unit is further configured to acquire data of multipath parallel reception paths according to the reception frame headers in the multipath parallel data frame structures; and process the acquired data of the multipath parallel reception paths into a single-path serial data frame structure, wherein the single-path serial data frame structure includes a serial reception frame header and data of at least one reception path;
in the transmission direction,
the single-path serial electrical signal is of a data frame structure, and the data frame structure includes a serial transmission frame header and data of at least one transmission path;
the serial-parallel conversion unit is configured to:
acquire data of the transmission paths according to the serial transmission frame header in the single-path serial data frame structure; and
process the acquired data of the transmission paths into multipath parallel data frame structures, the multipath parallel data frame structures include transmission frame headers and data of transmission paths.

In an embodiment of the present invention, in the reception direction, the frame headers or the data of reception paths of the data frame structures further includes path operating information; the path operating information includes at least one of path operating mode information, path signal modulation format information, path data transmission rate information, path operating wavelength information and operating path quantity information; and
in the transmission direction, the frame headers or data of transmission paths of the data frame structures further includes path operating information; the path operating information includes at least one of path operating mode information, path signal modulation format information, path data transmission rate information, path operating wavelength information and operating path quantity information.

In order to solve the above problems, the present application provides an optical-electrical transceiving device, including:
at least two multipath optical-electrical transceiving modules and an optical path splitting-combining processor;
the optical path splitting-combining processor is configured to split the received optical signal into multipath optical signals, and distribute the multipath optical signals to the at least two multipath optical-electrical transceiving modules;
in a reception direction, the multipath optical-electrical transceiving modules are configured to perform multipath splitting processing on the received optical signal; and
in a transmission direction, the multipath optical-electrical transceiving modules are configured to perform multipath combining processing on the received electrical signal.

The present invention has the following beneficial effects:
According to the optical-electrical receiving and transmitting method and apparatus, and the optical-electrical transceiving method, module and device, the problems in the optical-electrical transceiving system that the physical interfaces are not simplified and are hard to be plugged and unplugged, are solved. In the present application, a multipath optical-electrical transceiving processing method is adopted, including: in the reception direction, the received optical signal is split into multipath optical signals, the multipath optical signals are processed into multipath parallel electrical signals, and the multipath parallel electrical signals are converted into a single-path serial electrical signal; in the transmission direction, the received single-path serial electrical signal, which is to be transmitted, is converted into multipath parallel electrical signals, then the multipath parallel electrical signals are processed into multipath optical signals, and finally the multipath optical signals are combined into a beam of optical signals. Compared with the existing art, the present application adopts a multipath processing technology to process the received optical-electrical signals, and avoids the problems in the existing art that the quantity of physical interfaces of an optical network system is large and the interfaces are hard to be plugged and unplugged due to adoption of a stacking technology when the capacity of the optical network is large.

### BRIEF DESCRIPTION OF DRAWINGS

Fig. 1 is a flow chart illustrating an optical-electrical receiving method provided by embodiment I of the present invention;
Fig. 2 is a flow chart illustrating an electrical-optical transmitting method provided by embodiment I of the present invention;
Fig. 3 is a schematic configuration diagram of data frames in reception direction/transmission direction, provided by embodiment I of the present invention;
Fig. 4 is a schematic configuration diagram of a data frame with path operating information included in a frame header part of the data frame, provided by embodiment I of the present invention;
Fig. 5 is a schematic configuration diagram of a data frame with the path operating information included in a path data part of the data frame, provided by embodiment I of the present invention;
Fig. 6 is a schematic configuration diagram of an optical-electrical receiving module provided by embodiment II of the present invention;
Fig. 7 is a schematic configuration diagram of an electrical-optical transmitting module provided by embodiment II of the present invention;
Fig. 8 is a flow chart illustrating a multipath optical-electrical transceiving method provided by embodiment III of the present invention;
Fig. 9 is a schematic configuration diagram of a multipath optical-electrical transceiving module provided by embodiment IV of the present invention;
Fig. 10 is a schematic configuration diagram for performing data transmission with the multipath optical-electrical transceiving module provided by embodiment IV of the present invention; and
Fig. 11 is a schematic configuration diagram of a device for optical-electrical transceiving provided by embodiment V of the present invention.

### DETAILED DESCRIPTION

A multipath processing manner is adopted in the present invention. In a reception direction, a received optical signal is split into multipath optical signals, the multipath optical signals are processed into multipath parallel electrical signals, and finally the multipath parallel electrical signals are converted into a single-path serial electrical signal and the single-path serial electrical signal is transmitted to an electrical interface. In an embodiment of the present invention, a process of splitting the received optical signal into multipath optical signals includes: splitting the received optical signal into multipath optical signals according to wavelength and/or distributed power of the optical signal. In a transmission direction, the single-path of serial electrical signal to be transmitted is converted into multipath parallel electrical signals, then the converted multipath parallel electrical signals are processed into multipath optical signals, and finally the multipath optical signals are combined into an optical signal and the optical signal is transmitted to an optical interface. With the multipath processing technology in the present embodiment, the problems in the existing art that number of physical interfaces of an optical network system is large and the interfaces are hard to be plugged and unplugged due to a stacking technology when capacity of the optical network is large, are solved. The problems in an optical-electrical transceiving system that the physical interfaces are not simplified and are hard to be plugged and unplugged, are solved.

In order to better understand the present application, contents of the present application are further described below by combining specific embodiments.

In the present embodiment, the used terms are only used for describing specific embodiments, but not limiting the present disclosure. For example, the used singular forms such as "one", "one of" and "the" further include plural forms, unless clearly indicated in the context. In addition, the used terms such as "one", "one of" etc. do not represent limitation to number, but existence of at least one of the referenced items. It should be further understood that, the term "include" used in the description represents having specific characteristics, steps and operations, rather than excluding having or adding one or more other characteristics, steps, operations and/or combinations thereof.

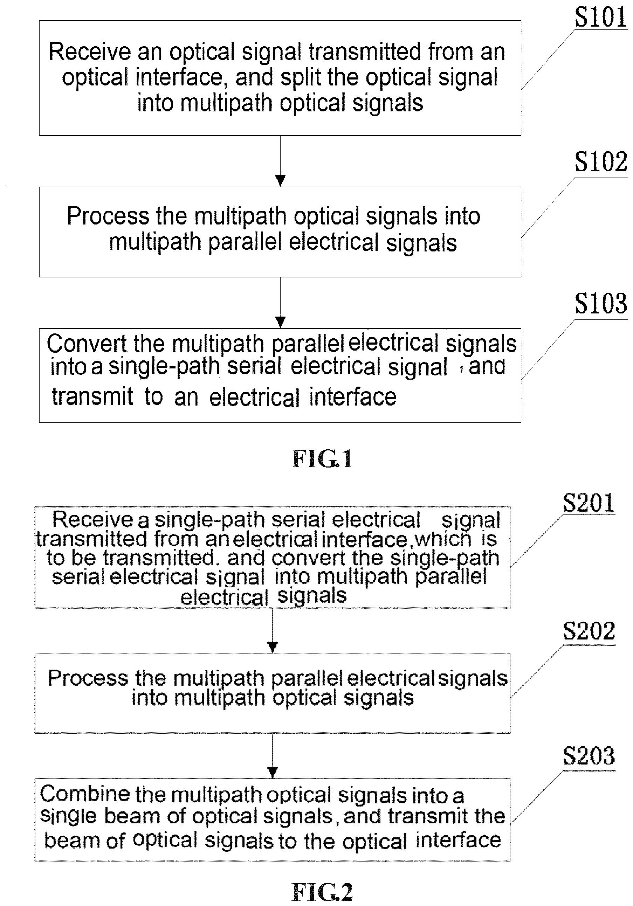

Fig. 1 shows an optical-electrical receiving method provided by the present embodiment. The method includes the following steps:
In step 101, an optical signal transmitted from an optical interface is received, and the optical signal is split into multipath optical signals;
In step 102, the multipath optical signals are processed into multipath parallel electrical signals; and
In step 103, the multipath parallel electrical signals are converted into a single-path serial electrical signal, and the single-path serial electrical signal is transmitted to an electrical interface.
In step 101, the optical signal transmitted from the optical interface is received. In the present embodiment, the optical interface is preferred but not limited to one optical interface. After the optical signal transmitted from the optical interface being received, the received optical signal is split into multipath optical signals.

Further, in step 101, a manner of splitting the received optical signal into multipath optical signals includes: splitting the received optical signal into multipath optical signals according to wavelength and/or distributed power of the optical signal. In the present embodiment, the optical signal is split preferably according to but not limited to the wavelength and/or distributed power of the optical signal, and may be further split according to attributes such as intensity of the optical signal and the like. Specifically, optical signals with same wavelength can be split into the same path, or optical signals distributed with same power are split into the same path, and optical signals with same wavelength and distributed with same power can be further split into the same path. Specific splitting is set according to user's demands, and unnecessary details are omitted herein.

Further, in step 102, a process of processing the multipath optical signals into multipath parallel electrical signals includes: processing the multipath optical signals into electrical signals of multipath parallel data frame structures (described as multipath parallel data frame structures hereinafter). The data frame structures include reception frame headers and data of reception paths.

Further, in step 103, the process of converting the multipath parallel electrical signals into a single-path serial electrical signal includes: acquiring data of the reception paths according to the reception frame headers in the multipath parallel data frame structures; and processing the acquired data of the reception paths into a single-path electrical signals of serial data frame structure (described as single-path serial data frame structure hereinafter). The single-path serial data frame structure includes a serial reception frame header and data of at least one reception path. In the present embodiment, a specific process of converting the multipath parallel electrical signals into a single-path serial data frame structure preferably includes: data of the reception paths is acquired according to the frame headers in the multipath parallel data frame structures, and the acquired data of the reception paths is subjected to be serial sorted preferably according to the location of the data (a path sequence) or data contents, so as to form a serial data column. To be sure, the serial data column can be randomly formed. Meanwhile, a new serial data frame header is formed, the formed serial data column is served as a data part in the serial data frame structure and the new serial data frame header is added, so as to form a single-path serial data frame structure.

In the present embodiment, the data frame structure includes:
multipath parallel data frame structures, in the present embodiment, one path of the multipath parallel data frame structures is taken as an example for describing, the data frame structure includes a reception frame header and data of reception path, and each path of data frame structure is preferably the same in the present embodiment;
single-path serial data frame structure including data of all the reception paths in the multipath parallel data frame structures, in the present embodiment, number of paths of the single-path serial data frame structures is determined by the multipath parallel data frame structures. For example, when there exists three path of parallel data frame structures, besides a newly generated serial frame header, the converted single-path serial data frame structure further includes data of three serial reception paths.

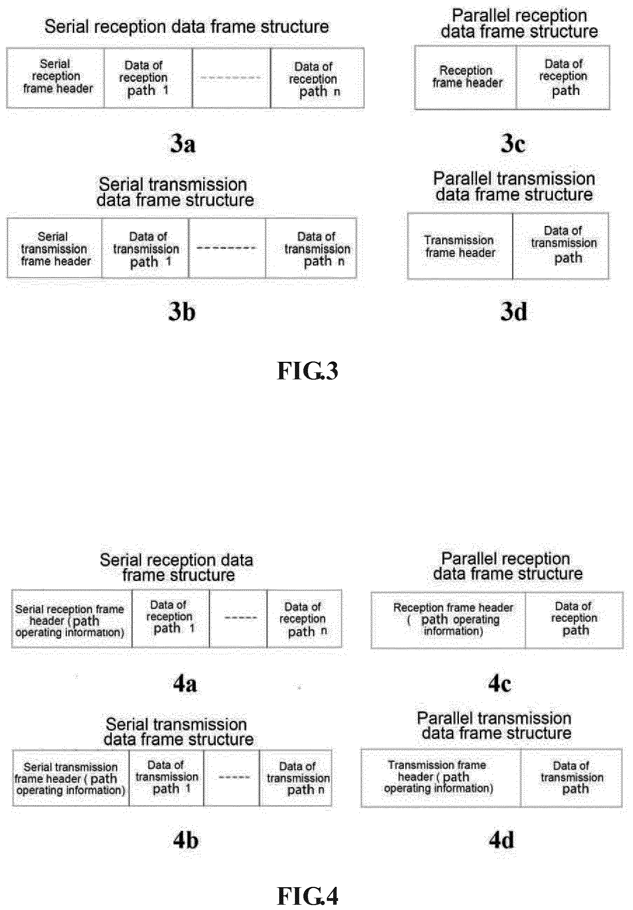

In order to further describe formats of the data frame structures in the present embodiment, Fig. 3a and Fig. 3c in Fig. 3 illustrate a serial reception data frame structure and parallel reception data frame structure respectively provided in the present embodiment. The multipath parallel data frame structure is included in Fig. 3c, and only one path of the data frame structure is selected to describe the data frame structure in Fig. 3c in the present embodiment. A specific process of converting the parallel data frame structure in Fig. 3c into the serial data frame structure in Fig. 3a is performed according to a serial-parallel conversion technology of the data frame structures.

Further, in the present embodiment, the data frame structure further includes path operating information having at least one of path operating mode information, path signal modulation format information, path data transmission rate information, path operating wavelength information and operating path quantity information. In the present embodiment, preferably, contents of the path operating information are not limited to the information mentioned above, and can be flexibly adjusted. A specific adjustment manner may be as follows: the path operating information can be adjusted according to a control command input by an external interface and also can be adjusted by setting an adjustment rule or command in the system. To be sure, the path operating information can be further adjusted in hardware form or software form. In the present embodiment, the contents and specific adjustment manner of the path operating information are not strictly limited, and contents and specific adjustment manners of the path operating information which can be thought under revelation of the present application belong to the protection scope of the present application.

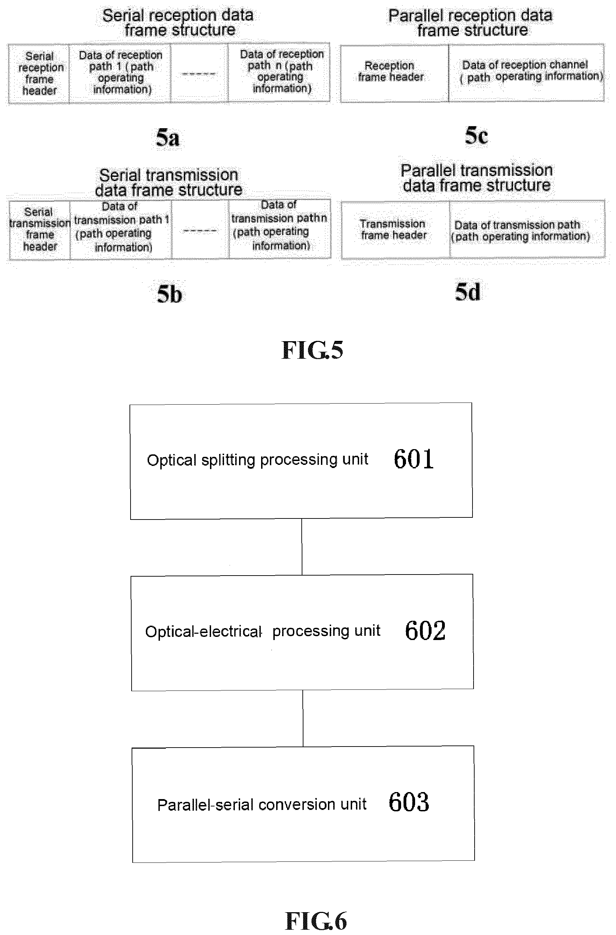

In the present embodiment, the path operating information is located at a frame header part in the data frame structure or a path data part of the electrical signal. Please refer to Fig. 4a and Fig. 4c in Fig. 4 and Fig. 5a and Fig. 5c in Fig. 5 for detail description. Fig. 4a and Fig. 4c in Fig. 4 show that the path operating information is written into the frame header part of the data frame structure. In the present embodiment, preferably, besides the path operating information, the frame header part of the data frame structure further includes data synchronization information and related protocol information. Fig. 5a and Fig. 5c in Fig. 5 show that the path operating information is written into the path data part of the data frame structure.

With the optical-electrical signal receiving method provided by the present embodiment, the optical signal transmitted from the optical interface can be processed in a multipath processing manner after being split, and the problem that the physical interfaces are not simplified due to a stacked data processing technology when capacity of the optical signal is large, is solved.

The present embodiment further provides an electrical-optical transmitting method. By referring to Fig. 2, the method includes the following steps:
in step 201, a single-path serial electrical signal transmitted from an electrical interface, which is to be transmitted, is received, and the single-path serial electrical signal is converted into multipath parallel electrical signals;
in step 202, the multipath parallel electrical signals are processed into multipath optical signals; and
in step 203, the multipath optical signals are combined into a single beam of optical signals, and the beam of optical signals are transmitted to an optical interface.

Further, in step 201, the single-path serial electrical signal transmitted from the electrical interface, which is to be transmitted, is received, the electrical interface of the single-path serial electrical signal to be transmitted is preferably but not limited to be one. In the present embodiment, the received single-path serial electrical signal to be transmitted is of a data frame structure (described as single-path serial data frame structure hereinafter) including a serial transmission frame header and data of at least one transmission path. Data of the transmission paths is acquired according to the serial transmission frame header in the single-path serial data frame structure, and is split into multipath parallel data frame structures for processing according to a path sequence of the transmission paths or data contents in the paths. For example, when the received single-path serial data frame structure further includes, besides the frame header, three serial paths carried with data which are respectively sorted as 1, 2 and 3, the three serial paths carried with data are split into three parallel paths carried with data and a new frame header is added respectively, so as to form three-path parallel data frame structures.

In the present embodiment, in order to further describe the data frame structure in the present embodiment, please refer to Fig. 3b and Fig. 3d in Fig. 3. A format of the single-path serial transmission data frame structure and a format of parallel transmission data frame structure are respectively provided in Fig. 3b and Fig. 3d. It should be noted that, multipath parallel transmission data frame structures are included in Fig. 3d. In the present embodiment, only a single-path transmission data frame structure is selected to describe the data frame structure in Fig. 3d in the present embodiment.

In the present embodiment, the data frame structure further includes path operating information having at least one of path operating mode information, path signal modulation format information, path data transmission rate information, path operating wavelength information and operating path quantity information. In the present embodiment, preferably, contents of the path operating information are not limited to the information mentioned above, and can be flexibly adjusted. A specific adjustment manner may be as follows: the path operating information can be adjusted according to the control command input by the external interface and also can be adjusted by setting the adjustment rule or command in the system. Certainly, the path operating information can be further adjusted in hardware form or software form. In the present embodiment, the contents and specific adjustment manner of the path operating information are not strictly limited, and contents and specific adjustment manners of the path operating information which can be thought under revelation of the present application belong to the protection scope of the present application.

In the present embodiment, the path operating information is located at a frame header part in the data frame structure or a path data part of the electrical signal. Please refer to Fig. 4b and Fig. 4d in Fig. 4 and Fig. 5b and Fig. 5d in Fig. 5 for detail description. Fig. 4b and Fig. 4d in Fig. 4 show that the path operating information is written into the frame header part of the data frame structure. In the present embodiment, preferably, besides the path operating information, the frame header part of the data frame structure further includes data synchronization information and related protocol information. Fig. 5b and Fig. 5d in Fig. 5 show that the path operating information is written into the path data part of the data frame structure.

In step 202, through technologies such as electrical-optical conversion, the multipath parallel electrical signals are processed into multipath optical signals according to the path operating information carried in the data frame structure.

In step 203, the multipath optical signals are combined into a single beam of optical signals, and the beam of optical signals are transmitted to the optical interface. In the present embodiment, a manner of combining the converted multipath optical signals into optical signals preferably includes but not limited to that: the multipath optical signals are combined into a beam of optical signals to be transmitted according to wavelength and/or distributed power of the multipath optical signals, and the combined beam of optical signals are transmitted by virtue of the optical interface.

The present embodiment provides an optical-electrical signal receiving method and an electrical-optical signal transmitting method respectively. When the two methods are simultaneously used, the transmitted optical-electrical signal can be processed in a multipath processing manner after being split, and the problem that the physical interfaces are not simplified due to the stacked data processing technology when the capacity of the optical signal is large, is avoided.

### Embodiment II

Fig. 6 is a schematic configuration diagram of an optical-electrical receiving module provided by the present embodiment. The optical-electrical receiving module includes: an optical splitting processing unit 601, an optical-electrical processing unit 602 and a parallel-serial conversion unit 603.

The optical splitting processing unit 601 is configured to split an optical signal transmitted from an optical interface into multipath optical signals and transmit the multipath optical signals to the optical-electrical processing unit.

The optical-electrical processing unit 602 is configured to process the received multipath optical signals into multipath parallel electrical signals and transmit the multipath parallel electrical signals to the parallel-serial conversion unit.

The parallel-serial conversion unit 603 is configured to convert the received multipath parallel electrical signals into a single-path serial electrical signal and transmit the single-path serial electrical signal to an electrical interface.

In the present embodiment, the optical interfaces and the electrical interfaces preferably include but not limited to one optical interface and one electrical interface.

Further, in the present embodiment, after the optical signal is received, the optical splitting processing unit 601 preferably but not limited to split the optical signal according to distributed power and/or wavelength of the optical signal (can further split the optical signal according to attributes such as intensity of the optical signal, etc.). Specifically, the optical splitting processing unit 601 splits the optical signal into multipath optical signals; and the multipath optical signals can be simultaneously processed.

In the present embodiment, the optical-electrical processing unit 602 includes an optical-electrical conversion function and is capable of processing the multipath optical signals into multipath parallel electrical signals, which are of data frame structures. Specifically, in the process of processing the multipath optical signals into the multipath parallel electrical signals, the path operating information is added in the data frame structures, and the path operating information includes at least one of the path operating mode information, the path signal modulation format information, the path data transmission rate information, the path operating wavelength information and the operating path quantity information. In the present embodiment, preferably, contents of the path operating information are not limited to the information mentioned above, and can be flexibly adjusted. The specific adjustment manner may be as follows: the path operating information can be adjusted according to the control command input by the external interface and also can be adjusted by setting the adjustment rule or command in the system. To be sure, the path operating information can be further adjusted in hardware form or software form. In the present embodiment, the contents and specific adjustment manner of the path operating information are not strictly limited, and contents and specific adjustment manners of the path operating information which can be thought under revelation of the present application belong to the protection scope of the present application.

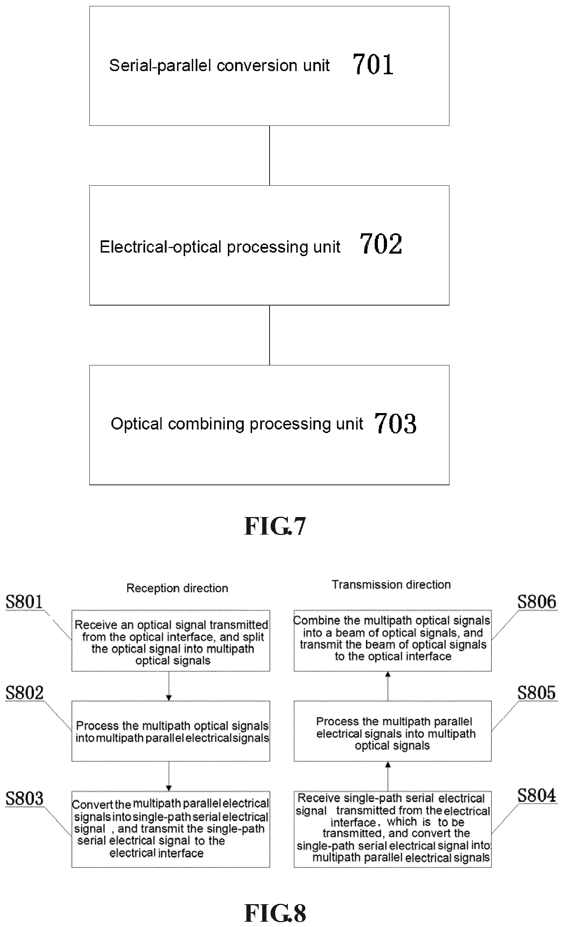

Fig. 7 is a schematic configuration diagram of an electrical-optical transmitting module provided by the present embodiment. The electrical-optical transmitting module includes: a serial-parallel conversion unit 701, an electrical-optical processing unit 702 and an optical combining processing unit 703.

The serial-parallel conversion unit 701 is configured to receive a single-path serial electrical signal transmitted from the electrical interface, which is to be transmitted, and convert the single-path serial electrical signal into multipath parallel electrical signals. In the present embodiment, the received single-path serial electrical signal to be transmitted is of a data frame structure (described as single-path serial data frame structure hereinafter) including a serial transmission frame header and data of at least one transmission path. The serial-parallel conversion unit 701 splits the single-path serial data frame structure into multipath parallel data frame structures preferably according to the path sequence or data contents in the single-path serial data frame structure. To be sure, in the present embodiment, the manner of splitting the single-path serial data frame structure into the multipath parallel data frame structures is not limited to splitting according to the path sequence or the data contents, and the serial data frame structure can also be randomly split.

In the present embodiment, through technologies such as electrical-optical conversion, the electrical-optical processing unit 702 processes the multipath parallel data frame structures into multipath optical signals according to the path operating information carried in the data frame structures.

In the present embodiment, the manner of combining the converted multipath optical signals into optical signals preferably includes but not limited to that: the multipath optical signals are combined into a beam of optical signals to be transmitted according to wavelength and/or distributed power of the multipath optical signals, and the combined beam of optical signals are transmitted out by virtue of the optical interface.

### Embodiment III

Fig. 8 is a flow chart illustrating a multipath optical-electrical transceiving method provided by the present embodiment. The method includes: a reception direction and a transmission direction.

In the reception direction, the method includes the following steps:
in step 801, an optical signal is received, and the optical signal is split into multipath optical signals;
in step 802, the multipath optical signals are processed into multipath parallel electrical signals; and
in step 803, the multipath parallel electrical signals are converted into a single-path serial electrical signal, and the single-path serial electrical signal is transmitted to the electrical interface.

In the transmission direction, the method includes the following steps:
in step 804, a single-path serial electrical signal to be transmitted is received, and the single-path serial electrical signal is converted into multipath parallel electrical signals;
in step 805, the multipath parallel electrical signals are processed into multipath optical signals; and
in step 806, the multipath optical signals are combined into a single beam of optical signals, and the beam of optical signals are transmitted to the optical interface.

In the present embodiment, the optical signal is received in the above step 801, and the method of splitting the optical signal into multipath optical signals includes: splitting the received optical signal into multipath optical signals according to the wavelength and/or distributed power of the optical signal. To be sure, the optical signal can be split according to other attributes of the optical signal, such as the intensity of the optical signal.

In the present embodiment, the split multipath optical signals are processed in the above step 802. Specifically, the multipath optical signals are processed into multipath parallel electrical signals. Preferably, in the present embodiment, the multipath parallel electrical signals are of electrical signal data frame structures (described as multipath parallel data frame structures hereinafter), and the multipath parallel data frame structures include reception frame headers and data of the reception paths.

Preferably, in the present embodiment, in the process of processing the multipath parallel data frame structures, path operating information is added in the multipath parallel data frame structures, and the path operating information includes at least one of the path operating mode information, the path signal modulation format information, the path data transmission rate information, the path operating wavelength information and the operating path quantity information. In the present embodiment, preferably, the contents of the path operating information are not limited to the information mentioned above, and can be flexibly adjusted. The specific adjustment manner may be as follows: the path operating information can be adjusted according to the control command input by the external interface and also can be adjusted by setting the adjustment rule or command in the system. To be sure, the path operating information can be further adjusted in hardware form or software form. In the present embodiment, the contents and specific adjustment manner of the path operating information are not strictly limited, and contents and specific adjustment manners of the path operating information which can be thought under revelation of the present application belong to the protection scope of the present application.

In step 803 of the present embodiment, the process of converting the multipath parallel electrical signals into the single-path serial electrical signal and transmitting the single-path serial electrical signal to the electrical interface includes: data of all the reception paths is acquired according to the frame headers in the multipath parallel data frame structures, the acquired data of the reception paths is subjected to serial sorting preferably according to the location of the data (the path sequence) or data contents, so as to form a serial data column. To be sure, the serial data column can be randomly formed. The formed serial data column is served as a data part in the serial data frame structure. Meanwhile, a new serial data frame header is formed and added into the formed serial data column, so as to form the single-path serial data frame structure.

In step 804 of the present embodiment, when the single-path serial electrical signal to be transmitted is received, the single-path serial electrical signal is converted into multipath parallel electrical signals. In the present embodiment, the received single-path serial electrical signal to be transmitted is of a data frame structure (described as single-path serial data frame structure hereinafter), and the single-path serial data frame structure includes a serial transmission frame header and data of at least one of the transmission paths.

The specific conversion format includes that: the single-path serial data frame structure is split into multipath parallel data frame structures for processing according to the sequence of the path data of the single-path serial data frame structure or the data contents preferably. To be sure, in the present embodiment, the manner of splitting the single-path serial data frame structure into the multipath parallel data frame structures is not limited to splitting according to the path sequence or the data contents. The serial data frame structure can be further randomly split.

In step 805 of the present embodiment, through technologies such as electrical-optical conversion, the multipath parallel data frame structures are processed into multipath optical signals according to the path operating information carried in the data frame structures.

In step 806 of the present embodiment, the manner of combining the converted multipath optical signals into optical signals preferably includes but not limited to: the multipath optical signals are combined into a beam of optical signals to be transmitted according to wavelength and/or distributed power of the multipath optical signals, and the combined beam of optical signals are transmitted by virtue of the optical interface.

### Embodiment IV

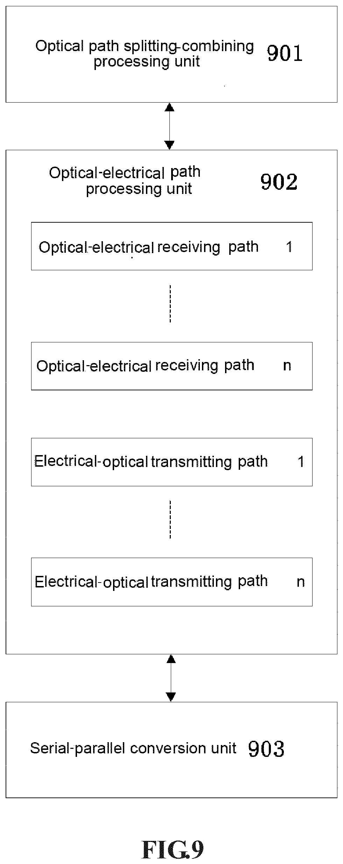

The present embodiment provides a multipath optical-electrical transceiving module as shown in Fig. 9. The multipath optical-electrical transceiving module includes: an optical path splitting-combining processing unit 901, an optical-electrical path processing unit 902 and a serial-parallel conversion unit 903.

In the reception direction:
the optical path splitting-combining processing unit 901 is configured to split the received optical signal into multipath optical signals, and transmit the multipath optical signals to the optical-electrical path processing unit 902.

In the present embodiment, the optical path splitting-combining processing unit 901 has an optical power division multiplexing function and/or an optical wavelength division multiplexing function, that is, the optical path splitting-combining processing unit 901 can split the received optical signal according to the distributed power and/or wavelength of the optical signal. To be sure, in the present embodiment, the optical signal is split preferably, but not limited to according to the distributed power and/or wavelength of the optical signal only, and the optical signal can be further split according to attributes such as the intensity of the optical signal. Specific splitting is set by acquiring user demands according to system setting, and the details are omitted herein.

In the present embodiment, preferably, the optical path splitting-combining processing unit 901 splits the received optical signal into multipath optical signals according to the distributed power and/or wavelength of the optical signal, and transmits the multipath optical signals to the optical-electrical path processing unit 902.

Further, the optical-electrical path processing unit 902 converts the received multipath optical signals into multipath parallel electrical signals, and transmits the multipath parallel electrical signals to the serial-parallel conversion unit 903. In the present embodiment, the process of processing the multipath optical signals into the multipath parallel electrical signals by the optical-electrical path processing unit 902 includes: the multipath optical signals are processed into electrical signals of multipath parallel data frame structures (described as multipath parallel data frame structures hereinafter), and each data frame structure includes a reception frame header and data of reception path.

Further, the serial-parallel conversion unit 903 converts the received multipath parallel electrical signals into a single-path serial electrical signal. In the present embodiment, the process of converting the multipath parallel electrical signals into a single-path serial electrical signal includes: data of all the reception paths is acquired according to the reception frame headers in the multipath parallel data frame structures, the acquired data of the reception paths is subjected to serial sorting preferably according to the location of the data (the path sequence) or data contents, so as to form a serial data column; the formed serial data column is served as the data part in the serial data frame structure. Meanwhile, a new serial data frame header is formed and added into the formed serial data column, so as to form the single-path serial data frame structure. In the present embodiment, the acquired data of the reception paths can be randomly used for serial data column formation.

In the transmission direction:
the serial-parallel conversion unit 903 further converts the received single-path serial electrical signal to be transmitted into the multipath parallel electrical signals, and transmits the multipath parallel electrical signals to the optical-electrical path processing unit 902. In the present embodiment, the received single-path serial electrical signal to be transmitted is of a data frame structure (described as single-path serial data frame structure hereinafter), and the single-path serial data frame structure includes a serial transmission frame header and data of at least one of the transmission paths. The single-path serial data frame structure is split into multipath parallel data frame structures for processing according to the path sequence of the data of the transmission paths or the data contents in the single-path serial data frame structure.

In the present embodiment, the optical-electrical path processing unit 902 includes an electrical signals-optical signals conversion function, that is, after the multipath parallel electrical signals being received, the optical-electrical path processing unit 902 converts the received multipath parallel electrical signals into the multipath optical signals and transmits the multipath optical signals to the optical path splitting-combining processing unit 901.

In the present embodiment, the optical path splitting-combining processing unit 901 includes at least the optical power division multiplexing function and/or the optical wavelength division multiplexing function. Therefore, after the multipath optical signals being received, the multipath optical signals are combined into a beam of optical signals according to the distributed power and/or wavelengths of the received multipath optical signals. To be sure, in the present embodiment, the received multipath optical signals can also be combined into a beam of optical signals according to attributes of the multipath optical signals, such as the light intensity. In the present embodiment, manners of combining the multipath optical signals are not limited to the above manners listed in the present embodiment.

In the present embodiment, the optical-electrical path processing unit 902 includes at least one optical-electrical receiving path and at least one electrical-optical transmitting path.

In the present embodiment, the optical-electrical receiving paths are configured to convert the received optical signals into electrical signals and transmit the electrical signals to the serial-parallel conversion unit 903. In the present embodiment, preferably, when there are two optical-electrical receiving paths, two-path parallel optical signals are converted into two-path parallel electrical signals respectively; and when there are a plurality of optical-electrical receiving paths, multipath optical signals are converted into multipath parallel electrical signals respectively.

The electrical-optical transmitting paths are configured to convert the received electrical signals into optical signals and transmit the optical signals to the optical path splitting-combining processing unit 901.

In the present embodiment, the quantity of the electrical-optical transmitting paths is preferably the same as that of the optical-electrical receiving paths. To be sure, the quantity of the electrical-optical transmitting paths may be different from that of the optical-electrical receiving paths. For example, in the reception direction, the multipath optical signals can be preferably processed by virtue of a plurality of optical-electrical receiving paths, while in the transmission direction, the multipath parallel electrical signals can be processed by virtue of one electrical-optical transmitting path. To be sure, the multipath parallel electrical signals are processed preferably by virtue of multipath parallel electrical-optical transmitting paths. The specific path setting manner is not limited in the present embodiment, and manners of processing the optical-electrical signals in a multipath manner which are thought under revelation of the present application belong to the protection scope of the present application.

Further, in the present embodiment, both of the single-path serial data frame structure and the multipath parallel data frame structure include the path operating information having at least one of the path operating mode information, the path signal modulation format information, the path data transmission rate information, the path operating wavelength information and the operating path quantity information. In the present embodiment, preferably, the contents of the path operating information are not limited to the information mentioned above, and can be flexibly adjusted. The specific adjustment manner may be as follows: the path operating information can be adjusted according to a control command provided by a manager linked with the external interface and also can be adjusted by setting a management module including the adjustment rule or command in the system. To be sure, the path operating information can be further adjusted in hardware form or in software form. In the present embodiment, the contents and specific adjustment manner of the path operating information are not strictly limited, and the contents and adjustment manners of the path operating information which can be thought under revelation of the present application belong to the protection scope of the present application.

In the present embodiment, preferably, the path operating information in the data frame structure can be located at the frame header part of the data frame structure or the data part of the paths.

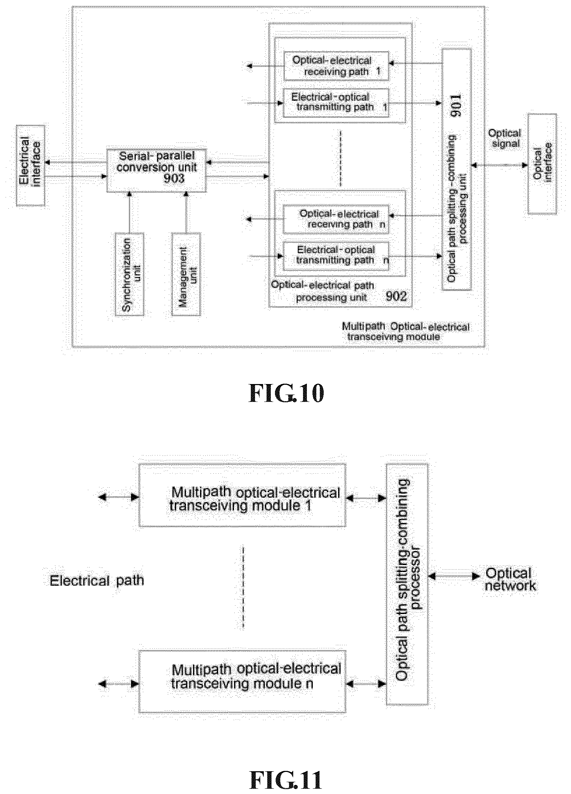

Now referring Fig. 10 for further describing the multipath optical-electrical transceiving module in the present embodiment. Fig. 10 is a schematic configuration diagram for performing data transmission with the multipath optical-electrical transceiving module provided by the present embodiment. The schematic configuration diagram of the present embodiment preferably includes an optical interface, a multipath optical-electrical transceiving module and an electrical interface, where the multipath optical-electrical transceiving module includes the optical path splitting-combining processing unit 901, the optical-electrical path processing unit 902 and the serial-parallel conversion unit 903. In the present embodiment, the optical-electrical path processing unit 902 further includes at least one optical-electrical receiving path and at least one electrical-optical transmitting path.

In the present embodiment, specific data transmission includes the following steps.

In the reception direction:
after an optical signal being received from the optical interface, the optical path splitting-combining processing unit 901 splits the received optical signal into multipath optical signals according to the distributed power and/or wavelength of the optical signal and distributes the multipath optical signals to the optical-electrical path processing unit 902.

The optical-electrical path processing unit 902 includes at least one optical-electrical receiving path and at least one electrical-optical transmitting path, and an optical-electrical receiving path and an electrical-optical transmitting path form a small optical-electrical processing unit. The plurality of optical-electrical receiving paths in the optical-electrical path processing unit 902 receive the distributed multipath optical signals and convert the received multipath optical signals into multipath parallel electrical signals, and the multipath parallel electrical signals are of multipath parallel data frame structures, and each data frame structure in the multipath parallel data frame structures includes a frame header and data of corresponding path; and the optical-electrical path processing unit 902 transmits the converted multipath parallel electrical signals to the serial-parallel conversion unit 903.

In the present embodiment, the serial-parallel conversion unit 903 has a serial-parallel conversion function and a parallel-serial conversion function. The parallel-serial conversion function is mainly used in the reception direction of the present embodiment.

The serial-parallel conversion unit 903 converts the received multipath parallel electrical signals into a single-path serial electrical signal.

In the transmission direction:
the serial-parallel conversion unit 903 mainly enables the serial-parallel conversion function, that is, the serial-parallel conversion unit 903 is configured to convert the received single-path serial electrical signal to be transmitted into multipath parallel electrical signals, and transmit the converted multipath parallel electrical signals to the plurality of electrical-optical transmitting paths in the optical-electrical path processing unit 902 for processing.

After the multipath parallel electrical signals being received by the plurality of electrical-optical transmitting paths in the optical-electrical path processing unit 902, the electrical signals are processed into multipath optical signals by utilizing the photoelectrical conversion technology, and the optical signals are transmitted to the optical path splitting-combining processing unit 901 to be combined.

The optical path splitting-combining processing unit 901 preferably combines the received multipath optical signals into a beam of optical signals according to the distributed power and/or wavelengths of the multipath optical signals, and transmits the beam of optical signals to the optical interface.

In the present embodiment, preferably, the multipath optical-electrical transceiving module further includes a synchronization unit and a management unit. The synchronization unit is configured to guarantee clock synchronization among units in the multipath optical-electrical transceiving module, and the management unit is configured to manage operating modes of the units in the multipath optical-electrical transceiving module and is mainly further configured to manage the path operating information in the optical-electrical path processing unit 902, where the path operating information includes at least one of the path operating mode information, the path signal modulation format information, the path data transmission rate information, the path operating wavelength information and the operating path quantity information.

In the present embodiment, preferably, the synchronization unit and the management unit is inside the system of the multipath optical-electrical transceiving module, and realized by software or hardware; and can be further outside the system of the multipath optical-electrical transceiving module and be realized via an external interface. In the present embodiment, preferably the synchronization unit and the management unit can be located inside the system of the multipath optical-electrical transceiving module and realized by software.

### Embodiment V

The present embodiment provides a multipath optical-electrical transceiving modular device, which is an application of stacking the multipath optical-electrical transceiving modules. The device includes: at least two multipath optical-electrical transceiving modules of embodiment IV and an optical path splitting-combining processor.

In the present embodiment, the optical path splitting-combining processor is configured to split the received optical signal into multipath optical signals according to the wavelength and/or distributed power of the optical signal, and distribute the multipath optical signals to the at least two multipath optical-electrical transceiving modules.

The multipath optical-electrical transceiving modules are configured to perform multipath splitting-combining processing on the received optical-electrical signals by adopting the method in embodiment I or embodiment III. Specifically, in the reception direction, the multipath optical-electrical transceiving modules are configured to perform multipath splitting processing on the received optical signals; and in the transmission direction, the multipath optical-electrical transceiving modules are configured to perform multipath combining processing on the received electrical signals.

The above contents are used for further describing the present invention in details by combining specific embodiments. It should not be determined that specific embodiments of the present invention are only limited to the descriptions. Several simple deductions or replacements may be made by those ordinary skilled in the art without departing from the concept of the present invention, and shall be considered to belong to the protection scope of the present invention.

### INDUSTRIAL APPLICABILITY

As mentioned above, the method and apparatus for optical-electrical receiving and optical-electrical transmitting, and the method, module and device for optical-electrical transceiving provided by embodiments of the present invention have the following beneficial effects: the received optical-electrical signals are processed by adopting the multipath processing technology, thus the problems in the existing art that the quantity of the physical interfaces of the optical network system is large and the interfaces are hard to be plugged and unplugged due to the stacking technology when the capacity of the optical network is large, are solved.

## Claims

1. An optical-electrical receiving method, comprising:
receiving an optical signal transmitted from an optical interface, and splitting the optical signal into multipath optical signals;
processing the multipath optical signals into multipath parallel electrical signals; and
converting the multipath parallel electrical signals into a single-path serial electrical signal, and transmitting the single-path serial electrical signal to an electrical interface.

2. The optical-electrical receiving method according to claim 1, wherein
a manner of splitting the received optical signal into multipath optical signals comprises:
splitting the received optical signal into multipath optical signals according to wavelength and/or distributed power of the received optical signal.

3. The optical-electrical receiving method according to claim 1, wherein
the step of processing the multipath optical signals into multipath parallel electrical signals comprises: processing the multipath optical signals into electrical signals of multipath parallel data frame structures, wherein the data frame structures comprise reception frame headers and data of reception paths.

4. The optical-electrical receiving method according to claim 3, wherein
the step of converting the multipath parallel electrical signals into a single-path serial electrical signal comprises:
acquiring data of multipath parallel reception paths according to the reception frame headers in the multipath parallel data frame structures; and
processing the acquired data of the multipath parallel reception paths into a single-path serial data frame structure, wherein the single-path serial data frame structure comprises a serial reception frame header and data of at least one reception path.

5. The optical-electrical receiving method according to claim 3 or 4, wherein
the frame headers or the data of the reception paths of the data frame structures further comprises path operating information, wherein the path operating information comprises at least one of path operating mode information, path signal modulation format information, path data transmission rate information, path operating wavelength information and operating path quantity information.

6. An optical-electrical receiving module, comprising: an optical splitting processing unit, an optical-electrical processing unit and a parallel-serial conversion unit; wherein
the optical splitting processing unit is configured to split an optical signal transmitted from an optical interface into multipath optical signals, and transmit the multipath optical signals to the optical-electrical processing unit;
the optical-electrical processing unit is configured to process the received multipath optical signals into multipath parallel electrical signals, and transmit the multipath parallel electrical signals to the parallel-serial conversion unit; and
the parallel-serial conversion unit is configured to convert the received multipath parallel electrical signals into a single-path serial electrical signal, and transmit the single-path serial electrical signal to an electrical interface.

7. The optical-electrical receiving module according to claim 6, wherein
the optical splitting processing unit is further configured to split the received optical signal into multipath optical signals according to wavelength and/or distributed power of the received optical signal.

8. An electrical-optical transmitting method, comprising:
receiving a single-path serial electrical signal transmitted from an electrical interface, which is to be transmitted, and converting the single-path serial electrical signal into multipath parallel electrical signals;
processing the multipath parallel electrical signals into multipath optical signals; and
combining the multipath optical signals into a single beam of optical signals, and transmitting the single beam of optical signals to an optical interface.

9. The electrical-optical transmitting method according to claim 8, wherein
the single-path serial electrical signal is of a data frame structure, and the data frame structure comprises a serial transmission frame header and data of at least one transmission path;
the step of converting the single-path serial electrical signal into multipath parallel electrical signals comprises:
acquiring data of the transmission paths according to the serial transmission frame header in the single-path serial data frame structure; and
processing the acquired data of the transmission paths into multipath parallel data frame structures comprising transmission frame headers and data of transmission paths.

10. The electrical-optical transmitting method according to claim 9, wherein
the frame headers or the data of transmission paths of the data frame structures further comprise path operating information, wherein the path operating information comprises at least one of path operating mode information, path signal modulation format information, path data transmission rate information, path operating wavelength information and operating path quantity information.

11. An electrical-optical transmitting module, comprising a serial-parallel conversion unit, an electrical-optical processing unit and an optical combining processing unit, wherein
the serial-parallel conversion unit is configured to convert a single-path serial electrical signal transmitted from an electrical interface, which is to be transmitted, into multipath parallel electrical signals, and transmit the multipath parallel electrical signals to the electrical-optical processing unit;
the electrical-optical processing unit is configured to process the received multipath parallel electrical signals into multipath optical signals, and transmit the multipath optical signals to the optical combining processing unit;
the optical combining processing unit is configured to combine the received multipath optical signals into a single beam of optical signals, and transmit the beam of optical signals to an optical interface.

12. The electrical-optical transmitting module according to claim 11, wherein
the optical combining processing unit is further configured to combine the received multipath optical signals into a single beam of optical signals according to wavelength and/or distributed power of the received multipath optical signals.

13. A multipath optical-electrical transceiving method, comprising:
in a reception direction,
receiving an optical signal transmitted from an optical interface, and splitting the optical signal into multipath optical signals;
processing the multipath optical signals into multipath parallel electrical signals; and converting the multipath parallel electrical signals into a single-path serial electrical signal, and transmitting the single-path serial electrical signal to an electrical interface;
in a transmission direction,
receiving a single-path serial electrical signal transmitted from the electrical interface, which is to be transmitted, and converting the single-path serial electrical signal into multipath parallel electrical signals;
processing the multipath parallel electrical signals into multipath optical signals; and combining the multipath optical signals into a single beam of optical signals, and transmitting the beam of optical signals to the optical interface.

14. A multipath optical-electrical transceiving module, comprising: an optical path splitting-combining processing unit, an optical-electrical path processing unit and a serial-parallel conversion unit;
in a reception direction,
the optical path splitting-combining processing unit is configured to split an optical signal received from an optical interface into multipath optical signals, and transmit the multipath optical signals to the optical-electrical path processing unit;
the optical-electrical path processing unit is configured to process the received multipath optical signals into multipath parallel electrical signals, and transmit the multipath parallel electrical signals to the serial-parallel conversion unit;
the serial-parallel conversion unit is configured to convert the multipath parallel electrical signals into a single-path serial electrical signal, and transmit the single-path serial electrical signal to an electrical interface;
in a transmission direction,
the serial-parallel conversion unit is configured to convert a single-path serial electrical signal received from the electrical interface, which is to be transmitted, into multipath parallel electrical signals, and transmit the multipath parallel electrical signals to the optical-electrical path processing unit;
the optical-electrical path processing unit is configured to process the received multipath parallel electrical signals into multipath optical signals, and transmit the multipath optical signals to the optical path splitting-combining processing unit;
the optical path splitting-combining processing unit is configured to combine the multipath optical signals into a single beam of optical signals, and transmit the beam of optical signals to the optical interface.

15. The multipath optical-electrical transceiving module according to claim 14, wherein
in the reception direction, the optical signal received from the optical interface is split into multipath optical signals by the optical path splitting-combining processing unit according to wavelength and/or distributed power of the received optical signal;
in the transmission direction, the multipath optical signals are combined into a single beam of optical signals by the optical path splitting-combining processing unit according to the wavelength and/or distributed power of the multipath optical signals.

16. The multipath optical-electrical transceiving module according to claim 14, wherein
in the reception direction,
the optical-electrical path processing unit is further configured to process the multipath optical signals into electrical signals of multipath parallel data frame structures, wherein the multipath parallel data frame structures comprise reception frame headers and data of reception paths;
the serial-parallel conversion unit is further configured to acquire data of multipath parallel reception paths according to the reception frame headers in the multipath parallel data frame structures; and process the acquired data of the multipath parallel reception paths into a single-path serial data frame structure, wherein the single-path serial data frame structure comprises a serial reception frame header and data of at least one reception path;
in the transmission direction,
the single-path serial electrical signal is of a data frame structure, wherein the data frame structure comprises a serial transmission frame header and data of at least one transmission path;
the serial-parallel conversion unit is further configured to:
acquire data of the transmission paths according to the serial transmission frame header in the single-path serial data frame structure; and
process the acquired data of the transmission paths into multipath parallel data frame structures, wherein the multipath parallel data frame structures comprise transmission frame headers and data of the transmission paths.

17. The multipath optical-electrical transceiving module according to claim 16, wherein
in the reception direction, the frame headers or the data of reception paths of the data frame structures further comprise path operating information, wherein the path operating information comprises at least one of path operating mode information, path signal modulation format information, path data transmission rate information, path operating wavelength information and operating path quantity information; and
in the transmission direction, the frame headers or the data of transmission paths of the data frame structures further comprise path operating information, wherein the path operating information comprises at least one of path operating mode information, path signal modulation format information, path data transmission rate information, path operating wavelength information and operating path quantity information.

18. An optical-electrical transceiving device, comprising:
at least two multipath optical-electrical transceiving modules according to any one of claims 14-17 and an optical path splitting-combining processor;
the optical path splitting-combining processor is configured to split the received optical signal into multipath optical signals, and distribute the multipath optical signals to the at least two multipath optical-electrical transceiving modules;
in the reception direction, the multipath optical-electrical transceiving modules are configured to perform multipath splitting processing on the received optical signal; and
in the transmission direction, the multipath optical-electrical transceiving modules are configured to perform multipath combining processing on the received electrical signal.
